# EUROPÄISCHE PATENTANMELDUNG

(11) **EP 1 881 307 A2**
(43) Veröffentlichungstag der Anmeldung: **23.01.2008**
(21) Anmeldenummer: 07013879.7
(22) Anmeldetag: 16.07.2007
(51) Int. Cl.: G01F 23/26

(54) **Füllstandssensor für Fluide und/oder Schüttgüter**

(30) Priorität: 18.07.2006 DE 102006033204
(71) Anmelder: RAWE ELECTRONIC GmbH, 88171 Weiler-Simmerberg (DE); Dyna Systems GmbH, 88161 Lindenberg (DE)
(72) Erfinder: Pfaff, Joachim, 87527 Sonthofen (DE)
(74) Vertreter: Riebling, Peter

(57) **Zusammenfassung**

Die Erfindung betrifft einen Füllstandssensor (1) für Fluide und/oder Schüttgüter, insbesondere für eine Flüssigkeit (6), beinhaltend mindestens zwei voneinander elektrisch isolierte und elektrisch auf- und entladbare Elektroden (3, 4), welche über ihre jeweiligen Umgebungsmedien Kapazitäten (15, 16) bilden, deren Kapazitätsänderungen durch mindestens eine Mess- und Auswerteschaltung einzeln erfassbar und auswertbar sind, dadurch gekennzeichnet, dass mindestens eine der Elektroden (4) dem zu messenden Fluid und/oder Schüttgut (6) abgewandt ist und eine von deren Füllstand (7) unabhängige Kapazität (15) bildet, und dass mindestens eine der Elektroden (3) dem zu messenden Fluid und/oder Schüttgut (6) zugewandt ist und eine von deren Füllstand (7) abhängige Kapazität (16) bildet. Vorteil ist, dass der Füllstandssensor (1) eine genauere Erfassung des Füllstandes (7) auch bei sich ändernden Umgebungsbedingungen ermöglicht.

## Beschreibung

Die Erfindung betrifft einen Füllstandssensor für flüssige oder gasförmige Fluide, und/oder für Schüttgüter aus Feststoffpartikeln nach dem Oberbegriff des Patentanspruchs 1. Der erfindungsgemäße Füllstandssensor ist für alle strömungs- und schüttfähigen Stoffe und deren Gemische geeignet, wie z.B. Flüssigkeiten, Gase, Suspensionen, Aerosole (Rauch, Nebel), Emulsionen (Gele, Pasten, Öle, Fette, Schlämme), Schäume, sowie Granulate und Pulver aus unterschiedlichsten Materialien, beispielsweise Kunststoff, Metall, Holz, Textil oder Kombinationen daraus.

Die Erfindung geht hierbei von dem bekannten, in der eigenen Patentschrift DE101 21 008 B4 geschützten Messprinzip aus und hat festgestellt, dass man mit einem solchen kapazitiven Sensor auch eine ausgezeichnete Füllstandsmessung durchführen kann.

Nachteil ist nämlich, dass beispielsweise bei der WO 98/26506 ein Sensor angegeben ist, der nur sehr ungenau misst.

Bei dieser Druckschrift sind insgesamt drei Elektroden vorhanden, nämlich eine äußere Elektrode, über welche eine Signalfrequenz auf die beiden anderen Elektroden eingekoppelt wird, die sich innerhalb des von der äußeren Elektrode umschließenden Raumes befinden.

Es erfolgt also eine gesteuerte Aufladung der beiden Elektroden, die im Innenraum dieser Signalelektrode angeordnet sind, so dass es sich um ein Frequenzübertragungsverfahren handelt.

Es wird somit der Ladungszustand dieser beiden im Innenraum angeordneten Elektroden erfasst.

Alle drei Elektroden sind bei einem Füllstandssensor der bekannten Art an der Außenwand eines Wasserbehälters (z. B. einer Kaffeemaschine) angeordnet. Es hat sich nun herausgestellt, dass der Füllstand nur sehr ungenau erfasst werden kann. Es fehlt eine Nachregelung, die auf z. B. Umwelteinflüsse wie Temperaturunterschiede oder Luftfeuchtigkeitsunterschiede oder Spannungsschwankungen Rücksicht nimmt.

Wenn also Spannungsschwankungen vorhanden sind oder sehr starke Temperaturänderungen, erfolgt eine veränderte Frequenzübertragung auf die beiden inneren Elektroden und die Schaltung erkennt dies fehlerhaft als Füllstand, der in Wirklichkeit in dieser Höhe nicht vorhanden ist.

Aufgabe der vorliegenden Erfindung ist es, einen gattungsgemäßen Füllstandssensor bereit zu stellen, der eine genauere Erfassung des Füllstandes auch bei sich ändernden Umgebungsbedingungen ermöglicht.

Zur Lösung der Aufgabe dienen die Merkmale des unabhängigen Patentanspruchs 1, wobei vorteilhafte Weiterbildungen Gegenstand der abhängigen Patentansprüche sind.

Hier setzt nun die Erfindung ein, die eine Auswerteschaltung nach dem auf den gleichen Anmelder zurückgehenden Patent DE 101 21 008 B4 vorsieht und erfindungsgemäß eine spezielle Elektrodenanordnung vorhanden ist.

Wichtig ist nun, dass eine erste Elektrode dem zu messenden Fluid oder Schüttgut, insbesondere Flüssigkeitsbad zugewandt ist (insbesondere jedoch außerhalb des Behälters angeordnet ist), während eine zweite Elektrode insbesondere genau der ersten Elektrode gegenüberliegend, jedoch von dem zu messenden Fluid oder Schüttgut, insbesondere Flüssigkeitsbad abgewendet ist.

Es wird also eine zweifache Elektrodenanordnung vorgesehen, wobei die erste Elektrode nächst dem zu messenden Fluid oder Schüttgut, insbesondere Wasserbad und die zweite Elektrode insbesondere genau auf der Rückseite der ersten Elektrode, isoliert von dieser und vom zu messenden Fluid oder Schüttgut, insbesondere Wasserbad abgewendet angeordnet ist.

Beide Elektroden werden bevorzugt auf einer Leiterplatte angeordnet und diese Leiterplatte ist gleichzeitig auch der Träger für die Auswerteschaltung. Damit ergibt sich eine sehr kleine und raumsparende Anordnung. Mit der Form des Behälters, der Lage des Sensors, sowie der Ausbildung der Software kann die Empfindlichkeit und Auflösung den Erfordernissen angepasst werden.

Es soll deshalb im Rahmen der vorliegenden Erfindung der vollständige Offenbarungsgehalt des eigenen Patentes DE 101 21 008 B4 umfasst sein.

Das Prinzip liegt also darin, dass eine Elektrode nahe am zu messenden Fluid oder Schüttgut, insbesondere Wasserbad ist und die andere Elektrode isoliert davon im Abstand angeordnet ist.

Erfindungsgemäß wird nun die Kapazität jeder Elektrode getrennt voneinander gegen die Umwelt gemessen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellende Zeichnungen näher erläutert. Hierbei gehen aus den Zeichnungen und ihrer Beschreibung weitere erfindungswesentliche Merkmale und Vorteile der Erfindung hervor.

Es zeigt:
Figur 1: eine Darstellung einer erste Ausführungsform der Erfindung als Füllstandsschalter zum Messen eines definierten Füllstandes;
Figur 2: eine Darstellung einer zweiten Ausführungsform der Erfindung als Füllstandssensor zum Messen eines Füllbereiches;
Figur 3: eine Darstellung einer dritten Ausführungsform der Erfindung als Erkennungssensor zum Erkennen des Vorhandenseins des entfernbaren Behälters für das zu messenden Fluid oder Schüttgut, insbesondere in Form eines Flüssigkeitsbehälters.

In den beispielhaften Figuren ist aus Gründen der Vereinfachung nur noch von einer "Flüssigkeit" als zu messendem Medium die Rede, auch wenn anstatt der "Flüssigkeit" beliebige andere strömungs- oder schüttfähige flüssige oder gasförmige "Fluide" und/oder feste "Schüttgüter" verwendet werden könnten. Der Begriff "Flüssigkeit" soll also im Rahmen der Erfindung nicht einschränkend aufzufassen sein und ist gegen "Fluid" und/oder "Schüttgut" austauschbar.

Das Flüssigkeitsbad 6 selbst stellt schon eine eigene Kapazität 10 gegen die Umwelt dar, die als Erde 11 angegeben ist.

Auf diese Weise wird also die Kapazität der Elektrode 3 gegenüber der Umwelt gemessen und ebenso die Kapazität der Elektrode 4.

Der daraus resultierende Unterschied zwischen der Kapazität der Elektrode 3 und 4 entspricht dem Flüssigkeitsstand.

Ist der Flüssigkeitsstand 7 nämlich unterhalb der beiden Elektroden 3 und 4, dann werden beide Elektroden etwa die gleiche Kapazität gegenüber der Umwelt aufweisen und somit kann damit ausgesagt werden, dass der Flüssigkeitsspiegel oder Füllstand 7 noch nicht im Elektrodenbereich ist.

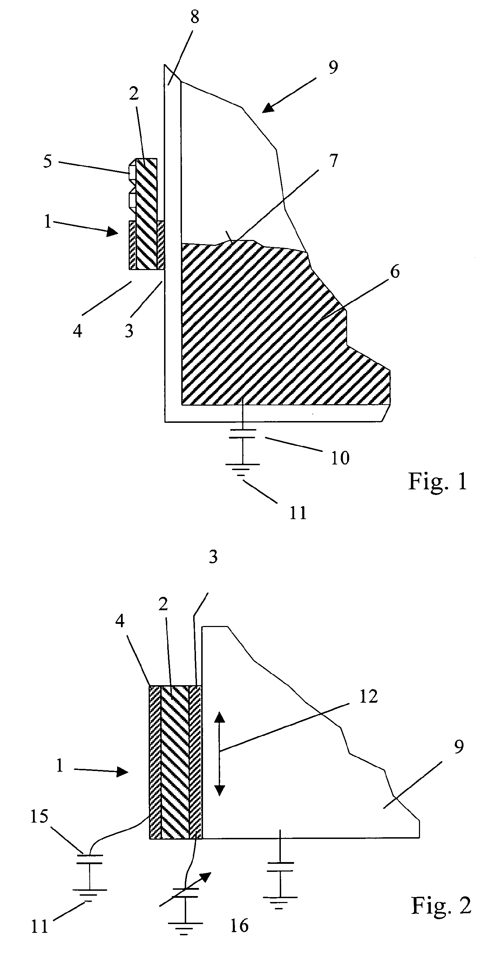

Steigt jedoch der Füllstand 7 in den Elektrodenbereich, wie dies in Figur 1 dargestellt ist, dann wird die Elektrode 3 eine höhere Kapazität gegenüber der Umwelt haben als vergleichsweise die Elektrode 4.

Weil die Flüssigkeit dielektrisch ist, wird somit die Flüssigkeit, die sich an der Innenseite der Wand 8 anlagert und gegenüber der Elektrode 3 liegt, auch entsprechend die Kapazität dieser Elektrode 3 durch ein durch die Flüssigkeit gegebenes Dielektrikum erhöht.

Damit wird insgesamt die Fläche der Elektrode 3 erhöht und damit wird eine höhere Kapazität gemessen.

Die Erfindung ist nicht auf einen Füllstandsschalter beschränkt, wie er annäherungsweise in der Figur 1 dargestellt ist. Es kann in einer weiteren Ausgestaltung der Erfindung vorgesehen sein, dass der Füllstandsschalter als Füllstandssensor ausgebildet ist, der sich über eine sehr große Höhe der Wand 8 erstreckt, so dass linear der Füllstand 7 im Elektrodenbereich (die dann sich sehr lang über die Wandung erstrecken) erfasst werden kann. Eine solche Darstellung ist in Figur 2 gezeigt, wo sich die Elektroden 3 und 4 über eine größere Höhe des Flüssigkeitsbades 6 erstrecken, so dass die gesamte Variation des Füllstandes im Bereich der Pfeilrichtungen 12 ohne Weiteres stufenlos erfassbar ist, was bisher noch nicht bekannt war.

Aus dem in Figur 1 dargestellten Füllstandsschalter kann somit gemäß Figur 2 auch ein Füllstandssensor gemacht werden.

Wichtig bei diesem Messprinzip ist aber jeweils, dass die eine Elektrode dem Wasserbad zugewandt und die andere Elektrode dem Wasserbad abgewandt ist, um so eine unterschiedliche Kapazität dann zu erbringen, wenn im Wasserbad ein entsprechender Flüssigkeitsstand vorhanden ist.

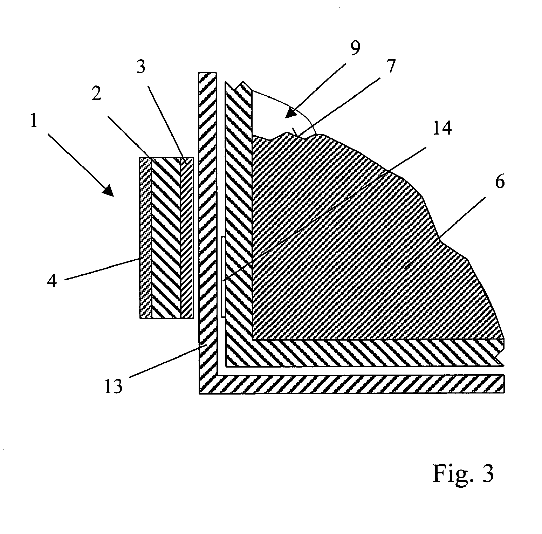

In dem Ausführungsbeispiel nach Figur 3 ist gezeigt, dass der genannte Füllstandssensor auch als Erkennungssensor für das Vorhandensein eines Wasserbehälters genutzt werden kann.

In diesem Ausführungsbeispiel ist gezeigt, dass an der Außenseite eines aus einer Maschinenwand 13 herausnehmbaren Flüssigkeitsbehälters 9 ein Erkennungsstreifen 14 angeklebt ist, der z. B. als Aluminiumstreifen oder jedenfalls als metallisch leitfähiger Streifen ausgebildet ist. Dieser Erkennungsstreifen 14 ragt mindestens teilweise in den Erfassungsbereich des Füllstandssensors mit den beiden Elektroden 3 und 4 hinein.

Falls der Flüssigkeitsbehälter 9 aus der Maschine herausgenommen ist, fehlt der Erkennungsstreifen 14 und die Kapazität der beiden Elektroden 3 und 4 gegenüber der Umwelt ist schon eine andere als vergleichsweise, wenn der Erkennungsstreifen 14 mit eingesetztem Flüssigkeitsbehälter 9 vorhanden ist.

Falls der Erkennungsstreifen 14 fehlt, kann somit darauf geschlossen werden, dass der Flüssigkeitsbehälter 9 fehlt oder falsch eingesetzt ist. Es wird mit der genannten Elektrodenanordnung also eine zusätzliche Erkennung des Vorhandenseins eines Flüssigkeitsbehälters 9 erbracht.

Wird der Flüssigkeitsbehälter 9 regelgerecht eingesetzt, dann überdeckt der Erkennungsstreifen 14 mindestens einen Teil der Erfassungsfläche der Elektroden 3 und 4 und die daran angeschlossene Auswerteschaltung wertet nun die sich hieraus ergebende Kapazität der beiden Elektroden 3 und 4 gegenüber der Umwelt aus und signalisiert, dass der Flüssigkeitsbehälter 9 lagenrichtig eingesetzt ist.

Wird nun zusätzlich in den Flüssigkeitsbehälter Wasser oder eine andere Flüssigkeit eingefüllt, dann steigt der Flüssigkeitsstand 7 beispielsweise ebenfalls in den Erfassungsbereich der beiden Elektroden 3 und 4 und kann stufenlos erfasst werden.

Es ist somit möglich, entweder einen Füllstandsschalter gemäß Figur 1 oder einen Füllstandssensor gemäß Figur 2 in Verbindung mit einer zusätzlichen Erkennung des Vorhandenseins des Flüssigkeitsbehälters 9 zu schaffen.

Der festen Kapazität 15 der Elektrode 4 liegt also die veränderbare Kapazität 16 der inneren Elektrode 3 gegenüber, wobei diese variable Kapazität 16 nun davon abhängt, ob dieser Elektrode gegenüberliegend der Erkennungsstreifen 14 angeordnet ist und noch zusätzlich ob ein bestimmter Füllstand 7 gegenüber der Elektrode 3 vorhanden ist oder nicht.

Durch die Tatsache, dass auf der Schaltungsplatine 2 die Auswerteschaltung mit den Schaltungselementen 5 auch für mehrere Sensoren angeordnet ist, ergibt sich der Vorteil, dass nicht nur ein Füllstandssensor 1 ausgewertet werden kann, sondern auch mehrere Füllstandssensoren mit der gleichen Schaltungsanordnung auf der einen Schaltungsplatine 2 ausgewertet werden können.

Beispielsweise kann die Anordnung nach den Figuren 1, 2 oder 3 für die Füllstandserfassung oder die Füllstandsmessung an einem Milchtank einer Kaffeemaschine vorgesehen werden, und es reicht dann aus, lediglich die Elektrodenanordnung, beispielsweise nach Figur 3 oder Figur 2 vorzusehen, wobei die Auswerteschaltung auf einer einzigen Schaltungsplatine 2 beispielsweise nach Figur 1 vorhanden ist.

Die genannten Elektroden werden mit einem auf der Schaltungsplatine 2 angeordneten Multiplexer seriell nacheinanderfolgend abgefragt und jedes Messergebnis wird gespeichert und kann ausgelesen werden.

### Figurenlegende

- 1.: Füllstandssensor
- 2.: Schaltungsplatine
- 3.: Zugewandte Elektrode
- 4.: Abgewandte Elektrode
- 5.: Schaltungselemente
- 6.: Flüssigkeitsbad (Fluid und/oder Schüttgut)
- 7.: Flüssigkeitsstand (Fluid und/oder Schüttgut)
- 8.: Wand von 9
- 9.: Flüssigkeitsbehälter (Fluid und/oder Schüttgut)
- 10.: Kapazität von 6 zu Erde
- 11.: Erde
- 12.: Pfeil richtung
- 13.: Maschinenwand
- 14.: Erkennungsstreifen
- 15.: feste Kapazität
- 16.: variable Kapazität

## Patentansprüche

1. Füllstandssensor (1) für Fluide und/oder Schüttgüter, insbesondere für eine Flüssigkeit (6), beinhaltend mindestens zwei voneinander elektrisch isolierte und elektrisch auf- und entladbare Elektroden (3, 4), welche über ihre jeweiligen Umgebungsmedien Kapazitäten (15, 16) bilden, deren Kapazitätsänderungen durch mindestens eine Mess- und Auswerteschaltung einzeln erfassbar und auswertbar sind, **dadurch gekennzeichnet, dass** mindestens eine der Elektroden (4) dem zu messenden Fluid und/oder Schüttgut (6) abgewandt ist und eine von deren Füllstand (7) unabhängige Kapazität (15) bildet, und dass mindestens eine der Elektroden (3) dem zu messenden Fluid und/oder Schüttgut (6) zugewandt ist und eine von deren Füllstand (7) abhängige Kapazität (16) bildet.

2. Füllstandssensor (1) nach Anspruch 1, **dadurch gekennzeichnet, dass** die Elektroden (3, 4) auf oder innerhalb einer Wandung (8) eines das zu messende Fluid und/oder Schüttgut (6) aufnehmenden Behälters (9) und/oder dessen umgebenden Maschinenteils (13) angeordnet sind.

3. Füllstandssensor (1) nach Anspruch 2, **dadurch gekennzeichnet, dass** die Elektroden (3, 4) auf der Außenwandung (8) des das zu messende Fluid und/oder Schüttgut (6) aufnehmenden Behälters (9) und/oder dessen umgebenden Maschinenteils (13) angeordnet sind.

4. Füllstandssensor (1) nach Anspruch 3, **dadurch gekennzeichnet, dass** mindestens der das zu messende Fluid und/oder Schüttgut (6) aufnehmende Behälter (9) von mindestens einer ortsfesten Elektrode (3) entfernbar ausgebildet ist und einen Erkennungsstreifen (14) insbesondere aus Metallmaterial wie Aluminium aufweist, der durch die mindestens eine ortsfesten Elektrode (3) detektierbar ist.

5. Füllstandssensor (1) nach einem der Ansprüche 1 bis 4, **dadurch gekennzeichnet, dass** die Elektroden (3, 4) etwa parallel beabstandet zueinander angeordnet sind.

6. Füllstandssensor (1) nach einem der Ansprüche 1 bis 5, **dadurch gekennzeichnet, dass** die Elektroden (3, 4) zum zu messenden Fluid und/oder Schüttgut (6) einen unterschiedlichen oder etwa den gleichen Abstand aufweisen.

7. Füllstandssensor (1) nach einem der Ansprüche 1 bis 6, **dadurch gekennzeichnet, dass** die Elektroden (3, 4) sandwichartig aufeinanderliegend angeordnet sind, elektrisch isoliert voneinander durch einen zwischen den Elektroden (3, 4) liegenden Isolator.

8. Füllstandssensor (1) nach einem Anspruch 7, **dadurch gekennzeichnet, dass** der elektrische Isolator zwischen den Elektroden (3, 4) eine Platine (2) ist, auf der zusätzlich die mindestens eine Mess- und Auswerteschaltung aufgenommen ist.

9. Füllstandssensor (1) nach einem der Ansprüche 1 bis 8, **dadurch gekennzeichnet, dass** die Elektroden (3, 4) etwa gleich große, die Kapazitäten (15, 16) begründende, Oberflächen besitzen.

10. Füllstandssensor (1) nach einem der Ansprüche 1 bis 9, **dadurch gekennzeichnet, dass** die Mess- und Auswerteschaltung eine Gleichspannungsquelle beinhaltet.

11. Füllstandssensor (1) nach Anspruch 10, **dadurch gekennzeichnet, dass** die Gleichstromquelle über Masse (11) auf Erdpotential liegt.

12. Füllstandssensor (1) nach einem der Ansprüche 1 bis 11, **dadurch gekennzeichnet, dass** die Mess- und Auswerteschaltung einen Verstärker, einen Statistikbaustein, sowie einen Integrator und/oder einen Komparator beinhaltet.

13. Füllstandssensor (1) nach einem der Ansprüche 1 bis 12, **dadurch gekennzeichnet, dass** die Auswertung der jeweiligen Ent- und/oder Aufladeströme der Elektroden (3, 4) durch getrenntes Erfassen und Vergleich untereinander über die Mess- und Auswerteschaltung erfolgt.

14. Füllstandssensor (1) nach einem der Ansprüche 1 bis 13, **dadurch gekennzeichnet, dass** die Entladeströme und/oder Aufladeströme der Elektroden (3, 4) ständig getaktet mittels Multiplex-Baustein durch die mindestens eine Mess- und Auswerteschaltung ausgewertet werden.

15. Füllstandssensor (1) nach einem der Ansprüche 1 bis 14, **dadurch gekennzeichnet, dass** der Zustand des Füllstandssensors (1), welcher der Anwesenheit oder dem Füllstand (7) des zu messenden Fluids und/oder Schüttguts (6) und/oder der Anwesenheit des Behälters (9) entspricht, optisch angezeigt wird.
